# EUROPEAN PATENT APPLICATION

(11) **EP 1 727 322 A1**
(43) Date of publication of application: **29.11.2006**
(21) Application number: 06251538.2
(22) Date of filing: 22.03.2006
(51) Int. Cl.: H04L 12/56, H04L 12/26, H04L 12/24

(54) **Tracking of traffic engineering topology in an autonomous system**

(30) Priority: 24.05.2005 US 135679
(71) Applicant: Agilent Technologies, Inc., Palo Alto CA 94303-0870 (US)
(72) Inventor: Garcia, Julio Cesar, Loveland, CO 80537-0599 (US); Lehane, Andrew R., Loveland, CO 80537-0599 (US)
(74) Representative: Exell, Jonathan Mark

(57) **Abstract**

A network topology map and a system and method of annotating a network topology map 600 of a packet network AS1 is described which monitors traffic engineering extensions 400 in link state advertisement packets. Traffic engineering infomiation contained in traffic engineering extensions 400 is extracted and the traffic engineering information is used to annotate the network topology map 600 with network attributes 620, 622, such as bandwidth information and traffic engineering metrics.

## Description

### BACKGROUND OF THE INVENTION

In order to distinguish themselves from their competitors and improve levels of service to customers without compromising existing cost structures or capital budgets, Internet service providers (ISPs) are increasingly employing cost optimization, service enhancement or service differentiation mechanisms to implement "traffic management" within their networks. These mechanisms include traffic engineering (described below), quality of service (QoS) measurements and service level agreements (SLAs). There are a variety of technologies that can help operators implement these "traffic-managed" networks. In the case of IP networks these include Multi-Protocol Label Switching (MPLS), see for example Request for Comments (RFC) 3031 of the Internet Engineering Task Force, and Differentiated Services (RFCs 2474 and 2475).

A common theme among these technologies is their use of packet classification at the ingress point where a data packet first eriters a discrete network (generally referred to in Internet terminology as an autonomous system). Conversely, the same packet will often be declassified at the egress point of that network so that the next network/autonomous system to receive the packet can, if it wishes, reclassify the packet in its own way. The classification ensures each packet receives the appropriate treatment when routed through a network. The treatment that a packet will receive as it passes through the network will differ depending upon the type of classification given to the packet at the ingress router.

For each classified packet, the intermediate routers coerce routing of the packet onto a different logical path through the network away from the predetermined default path that the packet would normally take if it were unclassified. At least one default path is defined for each source and destination within the network. This default path is typically the least-cost path as defined by the Interior Gateway Protocol (IGP) cost metric for each interconnection.

A logical, or dedicated path is therefore an alternative non-default path taken by any packet that receives different routing (packet forwarding) treatment. A logical path may for example be a separate physical path from the one that would typically be taken by the packet if it were unclassified. Similarly a logical path may be defined by different queuing treatment at the intermediate routers. In either example, a classified packet will receive a different set of treatments, depending upon the classification received, giving the packet a different set of transmission characteristics as compared to the same packet were it routed on the default path. Each logical path has a set of assigned properlies that determine the transmission characteristics for the packets that traverse the path, such as how much bandwidth on the physical interconnection is reserved for that logical path, the level of service ("bronze", "silver" or "gold"), the maximum permissible jitter, or any specific routers through which the logical path must pass.

For example, a network operator applying traffic engineering may decide to transmit videoconference traffic that is sensitive to jitter via a dedicated logical path through its MPLS-enabled network. That path is different from other default paths over which non-videoconference traffic is routed. Despite having potentially more router hops, the dedicated path (in this case a separate physical path) carries no other traffic and can therefore easily accommodate the combined voice and video load without introducing unwanted jitter. All other traffic is routed over the default path, e.g. the route with the smallest overall cost metric as defined by the IGP. Whichever route is taken, all traffic eventually arrives at the egress router and the packets are then declassified ready to be passed to the next network. Without this load balancing, all network packets would be routed using the de fault path and at peak times this may cause the network to become overloaded and discard or delay packets, making the videoconference unusable and causing problems for other data traffic users.

The traffic-engineering process can be applied at many different levels, for example for different customers, for different services or for combinations of both. Equally, other traffic-management tools such as QoS and SLA mechanisms that have different business objectives could be employed. Both QoS and SLAs require packet classification at the ingress and egress points and both result in other routing policies and the use of logical paths that are different from the default (usually the least-cost) path to route traffic concurrently within the network.

The overall Internet is divided into many administrative domains. For example, an Internet service provider might constitute a single administrative domain. Each administrative domain forms part of the Internet by entering into agreements with neighbouring domains (other ISPs etc.) to form peering or transit relationships to carry each other's traffic and enable the connectivity expected by users. An administrative domain contains one or more autonomous systems (ASs). An AS is a set of routers typically under a single technical administration (e.g. an ISP), which (i) appears externally to have a single coherent interior routing plan (using one and possibly several interior gateway protocols and one or more common metrics to route packets within the AS); (ii) presents a consistent picture of what destinations are reachable through it; and (iii) uses an exterior gateway protocol to route packets to other ASs.

Hereinafter the word "network" is used, in the context of the Internet to mean such an autonomous system. In the context of other kinds of communications system the word network should be understood as meaning an ensemble of operational elements which is analogous in concept and functionality to an Internet AS, whether the ensemble comprises the whole of the system or only part thereof.

The Internet consists of many ASs in many administrative domains. At each connection between each AS there are "edge" routers and each edge router has the potential to implement some form of traffic management. A large ISP may have many ingress and egress routers interacting with many other ISPs and have many different end customers. Each ingress and egress router could be classifying and routing traffic using many different policies. The enormous challenges involved in deploying, monitoring and managing traffic-management technologies is readily apparent.

Having knowledge of the overall topology of the network (e.g. the identity of active edge routers and of intermediate routers which handle a packet traversing the network) is of considerable assistance in meeting these challenges. One method for discovering the overall topology of the network is described in European Patent Application, Publication Number EP 1 387 527 A1 entitled Identifying Network Routers and Paths by Lehane (hereinafter "Lehane"), the disclosure of which is hereby incorporated herein by reference. The network topology discovered in this way provides an enormous amount of useful information to the network engineers, however, the network topology does not provide capabilities for using the traffic engineering extensions set forth in RFC 3630 of the Internet Engineering Task Force titled "Traffic Engineering Extensions to OSPF Version 2" ("OSPF-TE"). Traffic engineering extensions are also being developed for the Intermediate system ― Intermediate system (IS-IS) protocol which are semantically identical to the OSPF-TEs.

These traffic extensions were added to the protocols because of the dedicated paths used by protocols like MPLS. The traffic extensions tell the different network equipment what dedicated paths have been pinned down, what paths need to be set up or torn down because of failures in the network, and specific attributes of the dedicated paths. What is needed is a mechanism to add the information carried by the traffic extensions to existing mapping which shows network topologies.

### BRIEF SUMMARY OF THE INVENTION

In one embodiment, a network topology map with traffic engineering annotations and method which adds traffic engineering information to a network topology map is disclosed. Packets such as link state advertisement packets, containing traffic engineering extensions are monitored as they move through the packet network and the traffic engineering information is extracted from the traffic engineering extensions. The traffic engineering information is then used to annotate the links and elements in the network topology map with the network attributes contained in the traffic engineering information.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 shows a notational fragment of the Internet;

FIGURE 2 shows an illustrative network topology description;

FIGURE 3 shows the format of a header of a traffic engineering extension in an opaque link state advertisement;

FIGURE 4 shows the format of a payload of the link state advertisement containing one or more nested type/length/value triplets for extensibility;

FIGURE 5 is a flow chart of a method according to the present invention; and

FIGURE 6 shows an illustrative network topology map annotated with traffic engineering extension information.

### DETAILED DESCRIPTION OF THE INVENTION

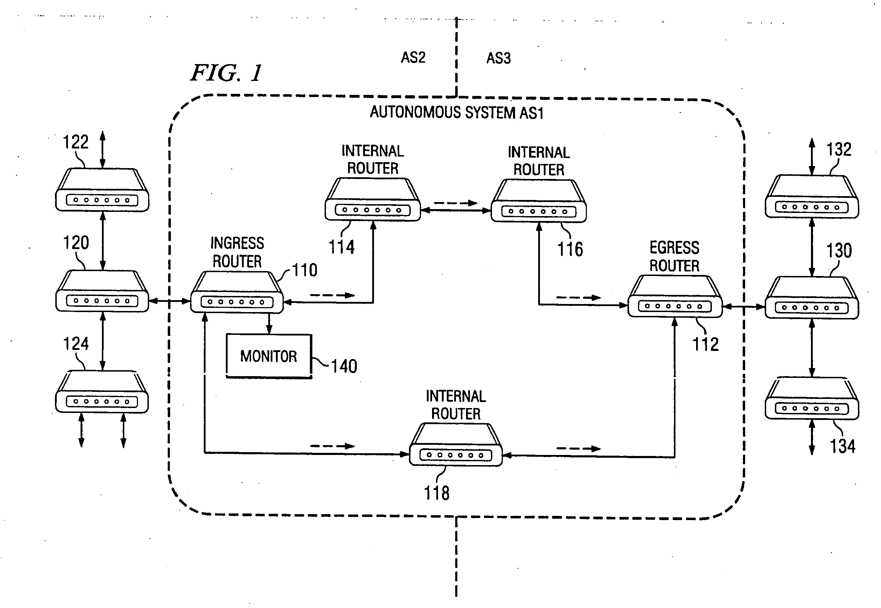

This concepts disclosed herein relate to methods and systems annotating the topology of a communications network with the traffic engineering attributes constraining the network. The concepts are applicable to networks that use link-state routing protocols such as Open Shortest Path First (OSPF) or Intermediate system-Intermediate system (IS-IS), or any equivalent thereof which include traffic engineering (TE) extensions. Referring to FIGURE 1, a notional fragment of the Internet is shown comprising an autonomous system AS1 and portions of two other autonomous systems AS2 and AS3 connected to it. The system AS1 contains network elements, which include two edge routers 110 and 112 which provide external connections, to the systems AS2 and AS3 respectively, and three internal routers 114, 116 and 118 which are connected solely to other routers within their own AS. The systems AS2 and AS3 likewise include edge routers 120 and 130 respectively, providing connection to the system AS1, as well as internal routers 122, 124, 132 and 134.

Each AS requires forwarding information, both local to the AS and global between ASs, so that data packets can be routed through the nodes or routers to the correct destinations. Between ASs the routers (and routes) are configured either statically or dynamically using a class of protocols called Exterior Gateway Protocols, e.g. the Border Gateway Protocol (BGP) described in RFC 1771. Within an AS the routers (and routes) are configured either statically or dynamically using a class of protocols called Interior Gateway Protocols (IGPs), such as OSPF, IS-IS or Routing Information Protocol (RIP). For convenience the following description will assume the use of OSPF, but the invention can be used in association with other protocols embodying analogous concepts and functionality to OSPF, including IS-IS.

In a link-state routing protocol such as OSPF each router is responsible for distributing and maintaining a database describing the topology of an area or zone forming the whole or part of the AS containing that router. This database is known as the link-state database. On start up, the router is only aware of its own local state, its connected interfaces and networks in accordance with information that is pre-configured by the router's administrator. The process of learning and distributing further network state information, such as connectivity, is achieved by exchanging special data packets defined by the OSPF protocol with other routers within the AS.

Initially "adjacencies" are formed with neighboring routers using, for example, packet multicast techniques. An adjacency is a relationship formed with each of a router's active neighbors for the purpose of exchanging routing information. Once an adjacency has been formed the adjacent routers exchange information about their state using OSPF link-state description packets formatted in accordance with the protocol. This process continues until both routers share a common view of the topology of their zone of the AS, thereby building a link-state database in each router.

On completion of the adjacency forming process throughout the AS, each router in the AS executes the same algorithm in conjunction with its own copy of the link-state database, to construct a unique routing table comprising a tree of least-cost paths, as defined by the IGP metric, from itself as root to each destination. The resultant least cost paths become the default routes taken by all unclassified packets traversing the network.

As noted above, sets of networks within the AS can be grouped together into routing areas or zones. The topology of a zone is not shared with the rest of the AS containing that zone, to provide a significant reduction in routing traffic. Between zones, summary packets are exchanged to ensure inter-zone connectivity.

After the initial generation of its link-state database and routing table, each router repeats the information exchange and route calculation process if a change in its network zone occurs. A change might involve the addition or removal of a link or router, or a change in a link's costs. To avoid the possibility of the link-state database becoming stale the packets are, in the absence of new updates, re-broadcast periodically, normally every half-hour.

The system implements passive discovery of the network topology within an AS using a link-state IGP such as OSPF or IS-IS, and creation of an annotated representation of that topology to facilitate the subsequent discovery of a network-wide set of paths through that network. The annotated representation describes the AS by :neans of a directed graph showing network resources, in which vertices represent network elements, such as routers or networks, and edges represent links connected to the network elements. The annotations indicate discovered data about the router or network represented by each vertex. In the case of routers the annotations indicate associated IP address, a set of interfaces denoted by IP address, and type or function (intra-zone, inter-zone or inter-autonomous system). For networks the associated network addresses and netmask, denoted by IP address, and network type (stub, transit or external) are shown. Transit networks are those capable of carrying data traffic that is neither locally originated nor locally destined. Stub networks are analogous to cul-de-sacs and external networks are destinations to other networks outside the AS.

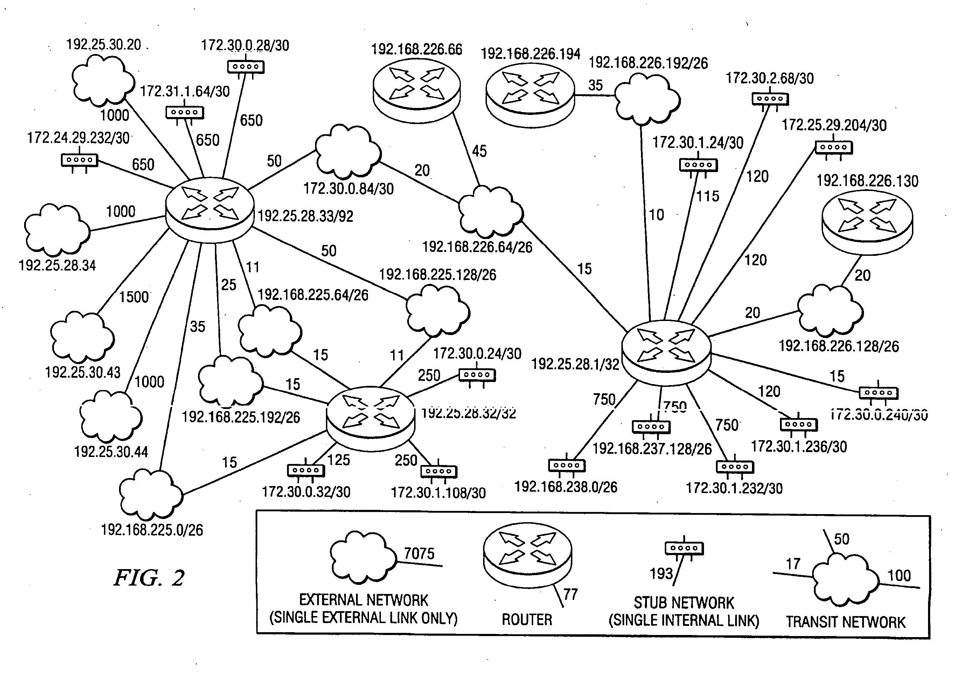

A visual representation of an example of a graph of a network topology produced in accordance with the description of Lehane is shown in FIGURE 2. The edges of the graph connect the individual vertices. An edge connects twc routers when they are attached via a physical point-to-point link whilst an edge connecting a router to a network indicates that the router has an interface on the network. Each edge is annotated with the cost of using that interface for packet forwarding, as defined by the IGP. In OSPF this is known as the link metric.

The topology discovery process is passive in the sense that the required information is obtained without interacting actively with the routers or other network elements and without generating additional network traffic. To this end and as shown in FIGURE 1 at least one probe or monitor 140 is connected to the AS at a point where the OSPF packets are present. The probe could for example be a low-cost computer, such as a "personal computer", running a dedicated software program and connected to the AS via an Ethernet card. The "logical" point of connection to the network is chosen to ensure that OSPF packets broadcast by the routers traverse that point. Physically, this connection point may be, for example, a port on a router, or a tap into a link between two routers or from a sub-network via a hub or switch. In OSPF terms a connection is required at any point in the network traversed by OSPF packets. Within the probe 140 itself the software program opens a connection in "promiscuous mode" onto the network link or segment of the chosen network zone. Promiscuous mode allows the probe to receive the required OSPF packets irrespective of their LAN destination address. The received packets are allowed to continue their journey through the network without interference (rather than being received and removed from the network).

Probe 140 from FIGURE 1 does not implement a state machine as described in RFC 2328 to establish an adjacency with any router, as that would require the probe to become an active participant in the OSPF routing protocol, thereby creating spurious link-state database entries in that zone's other routers. Instead probe 140 remains passive and relies on the flooding process of OSPF packets by the routers in the zone or AS. Probe 140 waits for OSPF packets to arrive on the monitored interface, rather than requesting them using the normal OSPF mechanisms. A topology derivation procedure is executed upon the receipt of every OSPF packet, to build up the desired topology description incrementally. The start-up procedure requires the default link-state refresh interval, normally one half-hour, to have elapsed before a complete topology description is determined. Thereafter by continuing to track the OSPF packets the probe can keep the topology description in step with the state of the network.

In one embodiment, each probe 140 monitors the packets traversing the link to which it is connected, and makes copies of selected types of packets described below. It then extracts data from these copies and processes the data to yield information for the annotated topology. This information is then used by the monitor to select the appropriate network element or link and add the traffic engineering information to that element or link. In an alternative embodiment the monitor copies the selected packets and extracts the traffic engineering information which is then sent to another computer which generates the network topology map and traffic engineering extensions based on the information received from the monitor. In yet another embodiment, the monitor sends the entire packets to a separate computer which extracts the information and then generates the network topology map and traffic engineering annotations. Other embodiments of monitors and computers or similar devices which in some combination monitor packets on the network, identify packets containing traffic engineering information, extract the traffic engineering information, and generate and annotate a network topology map can be imagined and are within the scope of the concepts described herein.

While the topology graph illustrated in FIGURE 2 provides information relating to the interconnections between network elements, such as those elements shown in FIGURE 1, it does not provide any information relating to traffic engineering attributes that may exist in the network.

The traffic engineering attributes of the network are contained in the traffic engineering extensions to protocols such as OSPF and IS-IS. To better understand the use of traffic engineering extensions the format OSPF traffic engineering extensions will be described. OSPF-TE extensions make use of OSPF opaque link state advertisements, or LSAs, which are described in RFC 2370, entitled "The OSPF Opaque LSA Option." Of the three types of LSAs defined in RFC 2370, only the area flooding LSAs (type 10) are used for the OSPT-TE extensions. Opaque LSAs used in OSPF-TE are flooded through the network in a similar manner to the standard OSPF topology LSA described in RFC 2328. The type 1 opaque LSA is defined as the traffic engineering LSA. The TE LSA describes routers, point-to-point links and connections to multi-access networks.

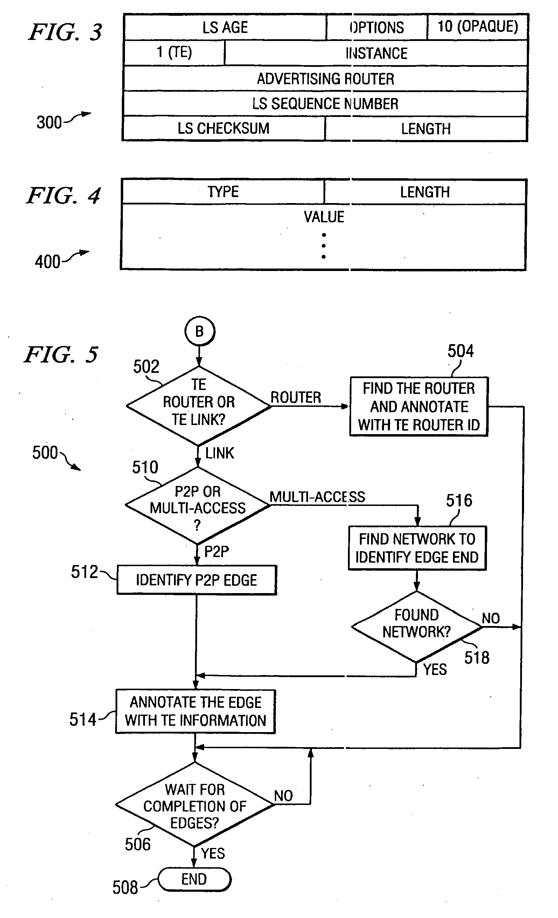

Referring now to FIGURE 3, the formal of the header of a TE opaque LSA is shown. LSAs are broadcast whenever a change in the network configuration occurs, and at regular intervals to ensure that stale information is not present in the network. Each LSA has a header portion 300 that contains both a key (comprising a combination of fields in the header) and age information that give a unique identity to the LSA within the AS. The process of determining if an LSA should be accepted into the link-state database is described in RFC 2328, sections 13.1 and 13.2, and is used by the probe 140 of FIGURE 1 to determine if an LSA it receives is newer than an existing LSA that it already has, and whether that LSA should be accepted into its own link-state database.

The payload of an LSA contains one or more nested type/length/value (TLV) triplets, which provide the information for the traffic engineering extension. FIGURE 4 shows the format of a TLV 400. Two types of TLVs are specified by the protocols: a router address and a link TLV. The router address TLV represents a stable address for the router. This address is typically implemented as a loopback interface and is expected to be usable even if the router interface goes down.

The link TLV describes a single link and is made up of a string of sub-TLVs. Only one link TLV is allowed in an LSA. There are several types of sub-TLVs including Link Type which signifies either a point-to-point or a multi-access link, Link ID, Local Interface IP Address, Remote Interface IP Address, Administrative Group, Traffic Engineering Metric, Maximum Bandwidth, Maximum Reservable Bandwidth, and Unreserved Bandwidth. The Traffic Engineering Metric sub-TLV is a value assigned by the system administrator which is used for traffic engineering purposes, such as a delay. The Maximum Bandwidth sub-TLV is the true link capacity in bytes per second and applies to the direction of the link. The Maximum Reservable Bandwidth sub-TLV is the maximum reservable bandwidth that may be reserved in the specific direction of the link. The Unreserved Bandwidth sub-TLV is the amount of bandwidth that has not yet been reserved for each of the priority levels. The initial value for the unreserved bandwidth is set to the maximum reservable band width.

As can be seen from the type of information contained in the traffic engineering extensions described above in their sub-TLV formats, annotating a network topology graph, such as the one shown in FIGURE 2 with the traffic engineering information would be enormously useful. FIGURE 5 describes a method according to the present invention for adding the traffic engineering information to a network topology graph. The network topology graph of FIGURE 2 is created by specifying the network vertices and edges which are discovered through the monitoring of the network LSAs. One example of a program for creating such a network topology map through the specifying of network vertices and edges is described in the European Patent Application by Lehane referenced above.

Method 500 begins with determining in process 502 whether the traffic engineering extension TLV is a Router Address TLV or a Link TLV. If it is a Router Address TLV the method proceeds to process 504. In process 504 the method finds the appropriate router and annotates the router information with the TE Router ID. The method then proceeds to process 506 which determines if the edge information is complete. If the information is complete the method finishes as represented by process 508.

Returning to process 502, if the traffic engineering extension TLV is a Link TLV, the method passes to process 510 which determines whether the Link TLV is for a point-to-point link or a multi-access link. If it is for a point-to-point link, the method passes to process 512 where the point-to-point edge identified by the TLV is found. The method then passes to process 514 which annotates the edge with the traffic engineering information before passing to process 506.

Returning to process 510, if the Link TI,V is for a multi-access link the method passes to process 516 which finds the appropriate network to identify the edge end. The method then passes to process 518 determines if the appropriate network has been found. If the network is found the method passes to process 514 which again annotates the edge with the traffic engineering information before passing to process 506. If, in process 518, it is determined that the network is not found the method passes to process 506. If the network is not found in process 518 it is possible that the portion of the network that the information belongs to has not been completely mapped by the topology mapping process. The traffic engineering information is then held and if that part of the network is completed at a later time, the traffic engineering information can then be added. Process 506 determines if the edge information is complete. If the information is complete the method finishes as represented by process 508.

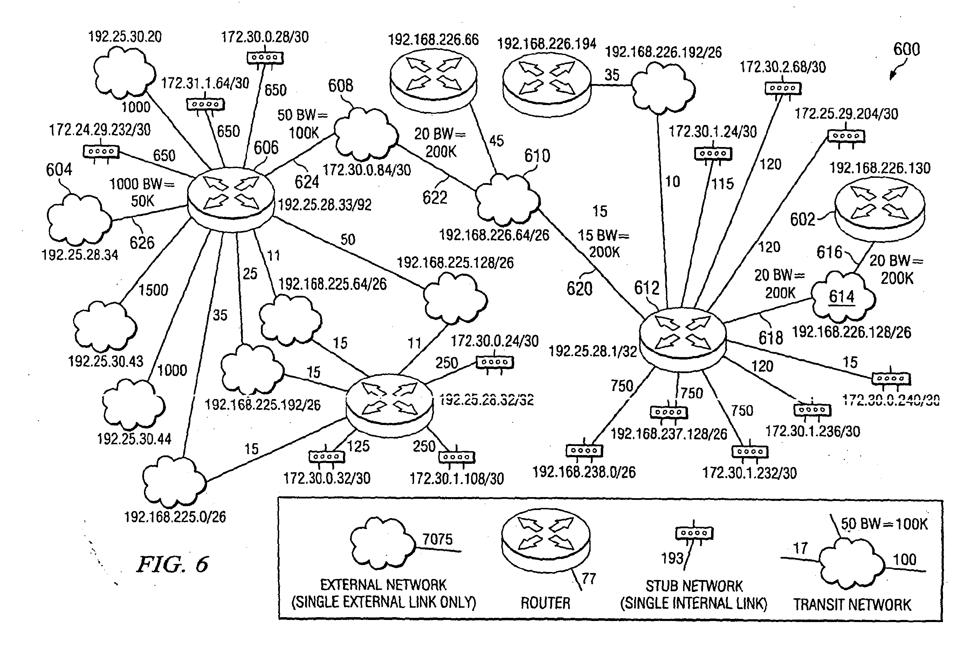

Referring now to FIGURE 6 an example of a network topology map 600 annotated with bandwidth related traffic engineering information is shown. Network topology map 600 shows a dedicated path from router 602 to external network 604 which passes through routers 606 and 612 and networks 608, 610 and 616. Without using the traffic engineering extensions in accordance with the present invention to annotate the network topology map the existence of the links between elements is shown, but traffic engineering information is unavailable. By adding the annotations derived from the traffic engineering extensions, any characteristic of the network contained in the traffic engineering TLVs can be added to the network topology map.

In FIGURE 6 the bandwidth information for each hop in the dedicated path between router 602 and network 604 has been annotated on the network topology map 600. Annotations 616 shows that the bandwidth of the link between router 602 and network 614 is 200 kilobits. Similarly, the annotations 618, 620 and 622 also show a bandwidth of 200 kilobits for their respective links. However, the bandwidth slows to 100 kilobits, as shown by annotation 624, for the link between network 608 and router 606, and slows even further to 50 kilobits for the link between router 606 and network 604. This annotated information clearly shows the potential for a bottleneck between router 606 and network 604 in the dedicated path between network 604 and router 602. This information could be used to provision alternate paths in the case of network congestion since the exact location of the congestion would be known.

While FIGURE 6 shows network topology map 600 annotated with maximum bandwidth information, any information that is contained in, and can be extracted from the traffic engineering extensions can be used to annotate a network topology map. In would be clear to one skilled in the art that traffic engineering information such as reserved bandwidth, unreserved bandwidth, traffic engineering metrics, and any other traffic engineering information would be enormously useful in administering networks.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method (500) for adding traffic engineering information (620, 622) in a packet network (AS1) to a network topology map (600), the method comprising:
monitoring packets (140) containing traffic engineering extension (400) in the packet network (AS1);
extracting traffic engineering information (502) for the traffic engineering extensions (400), the traffic engineering information identifying network resources (600) and network attributes (620, 622); and
annotating the network resources in the network topology map (600) with the network attributes (620, 622).

2. The method of claim 1 wherein the network resources (600) include network elements (110, 112) and network links (620, 622).

3. The method of claim 2 wherein the network elements include routers, transit networks, external networks and stub networks (FIGURE 2).

4. The method of claim 1 wherein the net work attributes include maximum bandwidth information, reserved bandwidth information, available bandwidth information, and traffic engineering metric information.

5. The method of claim 1 wherein monitoring comprises snooping link state advertisement packets in the packet network (AS1).

6. The method of claim 1 wherein the network topology map (600) shows dedicated paths through the packet network (AS1).

7. A method of annotating a network topology map (600) having information on vertices and edges in a packet network (AS1) with traffic engineering information, the method comprising:
snooping traffic engineering extensions (400) to link state advertisement packets (300) in the packet network (AS1) using one or more network monitors (140);
determining (502) which traffic engineering extensions (400) contain traffic engineering link information (514);
identifying an edge (516) in the packet network (AS1) associated with the traffic engineering link information (514); and
adding the traffic engineering link information (514) to the edge information in the network topology map (600).

8. The method of claim 7 further comprising determining if the traffic engineering link information (510) is point-to-point link information or multi-access link information.

9. The method of claim 7 further comprising determining which traffic engineering extensions (400) contain traffic engineering router identifying information (502) and adding the router identifying information to the appropriate router information in the vertices' information (504).

10. A system for adding traffic engineering information (400) to a network topology map (600) of a packet network (AS1), the system comprising:
a monitor (104) in the packet network (AS1), the monitor (140) operable to snoop packets (300, 400) in the packet network (AS1) containing traffic engineering information; and
a computer receiving the traffic engineering information from the monitor (140) and adding the traffic engineering information (400) to the network topology map (600).

11. The system of claim 10 wherein the monitor (140) extracts the traffic engineering information from traffic engineering extensions (400) and sends the traffic engineering information to the computer.

12. The system of claim 10 wherein the monitor (140) sends the snooped packets to the computer and the computer extracts the traffic engineering information (400).
